Europäisches Patentamt

European Patent Office

Office européen des brevets

(19)

(11) Publication number: **0 118 261**
**A1**

(12) **EUROPEAN PATENT APPLICATION**

(21) Application number: **84301205.5**

(22) Date of filing: **24.02.84**

(51) Int. Cl.³: **F 16 H 1/14**
**F 16 H 1/44**

(30) Priority: **04.03.83 US 472303**

(43) Date of publication of application:
**12.09.84 Bulletin 84/37**

(84) Designated Contracting States:
**DE FR GB SE**

(71) Applicant: **EATON CORPORATION**
**100 Erieview Plaza**
**Cleveland Ohio 44114(US)**

(72) Inventor: **Clopton, Robert Thomas**
**R2 Box 70A**
**Magnolia Kentucky 42757(US)**

(72) Inventor: **Ream, James Carroll**
**106 Sunnychat Place**
**Glasgow Kentucky 42141(US)**

(74) Representative: **Douglas, John Andrew**
**Eaton House Staines Road**
**Hounslow Middlesex TW4 5DX(GB)**

(54) Improved bevel gear and gear drive utilizing same.

(57) An improved pocket bevel gear (112) and improved bevel gear drive (100) utilizing the improved bevel gear (112) and another improved bevel ger (116) meshed therewith is provided. The improved bevel gear (112) is provided with a rib (140) at the larger diameter heel end (141) thereof which defines a concave spherical surface (142) about the pitch apex (134) of both gears and the other gear (116) is provided with a convex spherical surface (146) at the larger diameter heel end (147) thereof about the pitch apex, which spherical surfaces will be in generally rolling contact to restrain movement of the other gear (116) along its axis of rotation (132) away from the apex.

EP 0 118 261 A1

./...

Fig. 3

-1-

## IMPROVED BEVEL GEAR AND
## GEAR DRIVE UTILIZING SAME

### BACKGROUND OF THE INVENTION

### Field of the Invention

The present invention relates to an improved bevel gear and gear drive utilizing same and in particular to an improved bevel gear, such as a pocketed bevel side or pinion gear, and an improved bevel gear drive, such as a pocketed bevel gear differential, utilizing same.

### The Prior Art

Bevel gears, such as bevel side and pinion gears, and bevel gear drives, such as bevel gear differentials, are well known in the prior art. Examples of such bevel gear differentials, as utilized in well known drive axle assemblies, may be seen by reference to United States Patents Nos. 3,503,280 and 3,762,503, the disclsoures of both of which are hereby incorporated by reference.

Pocketed gear differentials wherein gears are provided with sleeves and/or plates to resist the normal flow of lubricant from between the meshing gear teeth and thereby provide a limited slip effect are known in the prior art as may be seen by reference to United States Patent No. 3,779,101, the disclosure of which is hereby incorporated by reference.

Gears utilizing reinforced gear teeth, usually in the form of ribs or webs are also known in the prior art as may be seen by reference to United States Patents Nos. 3,605,518 and 3,861,231, the disclosures of both of which are hereby incorporated by reference.

While the prior art bevel gear differential gear drives are widely utilized, they are not totally satisfactory as the pinion gear spherical back faces and the support casing mating surfaces require relatively close tolerance machining to provide bearing surfaces for the required thrust washers which resist the tendency of bevel gears to move radially outwardly under load. Additionally, the interfacing surfaces of the pinion gears and thrust washers tend to wear and or burn during spin out conditions which is believed to result from a combination of high forces, non rolling contact and difficulty in maintaining sufficient lubrication on the contacting surfaces.

SUMMARY OF THE INVENTION

In accordance with the present invention, the drawbacks of the prior art are minimized or overcome by the provision of an improved bevel gear drive, such as a bevel gear differential, wherein the need for machining the entire spherical end faces of the bevel pinion gears, the need for machining a mating spherical surface on the support housing and the need for providing pinion gear thrust washers is eliminated. The above is accomplished by providing an improved pocketed bevel side gear, constantly meshed with one or more bevel pinion gears, having a concave spherical radius rib or web at the radially outer end of the gear tooth space the concave spherical surface of which has its apex at substantially the same point on space as the gear teeth pitch cone apex. Accordingly, the spherical surface of the rib will be in only rolling or substantially rolling contact with a spherical surface on the back end of the pinion gears which will be supported to resist radially outward movement solely by the concave spherical surface. Additionally, the web will form a pocket for improved retention of lubricant and will protect the ends of the gear teeth from chipping and/or breakage during handling.

Accordingly, it is an object of the present invention to provide a new and improved bevel gear.

A further object of the present invention is to provide an improved bevel gear drive, such as a bevel gear differential, utilizing a new and improved pocketed bevel side gear and improved bevel pinion gears.

These and other objects and advantages of the present invention will become apparent from a reading of the detailed description of the invention taken in connection with the attached drawings.

BRIEF DESCRIPTION OF THE DRAWINGS

FIGURE 1 is a sectional view of a drive axle utilizing a prior art bevel gear differential.

FIGURE 2 is an exploaded view of a portion of FIGURE 1.

FIGURE 3 is a partial sectional view of a drive axle similar to the axle of FIGURE 1 but utilizing the improved bevel gear structure and differential of the present invention.

FIGURE 4 is an enlarged sectional view of the improved pocket bevel side gear and improved bevel pinion gear of FIGURE 3.

FIGURE 5 is a top view of the improved pocket bevel side gear of the present invention.

DESCRIPTION OF THE PREFERRED EMBODIMENT

Certain terminology will be used in the following description for convenience in reference and will not be limiting. The words "upwardly", "downwardly", "rightwardly" and "leftwardly" will designate directions in the drawings to which reference is made. The words "inwardly" and "outwardly" will refer to directions towards and away from, respectively, the geometric center of the device and designated parts thereof. Said teminology will include the words above specifically mentioned, derivatives thereof and words of similar import.

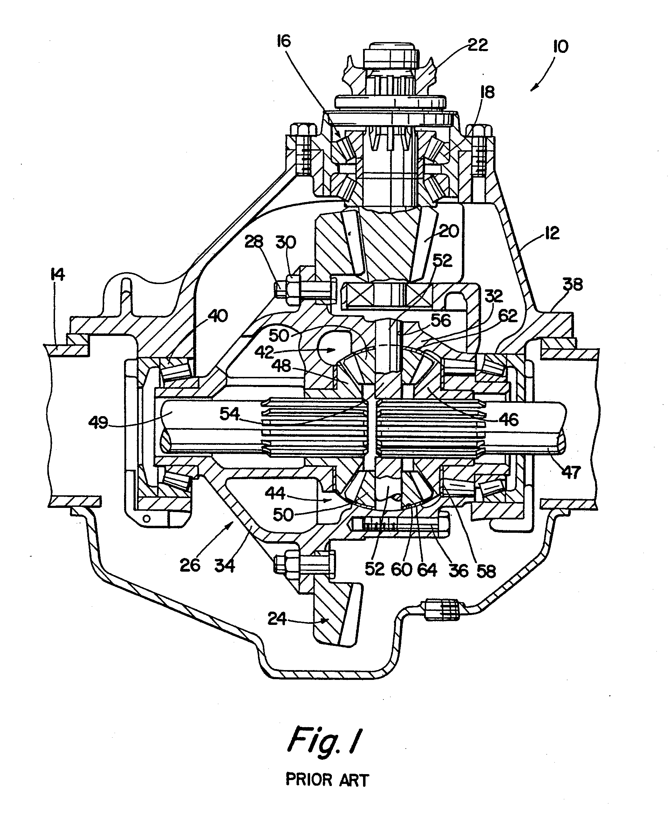

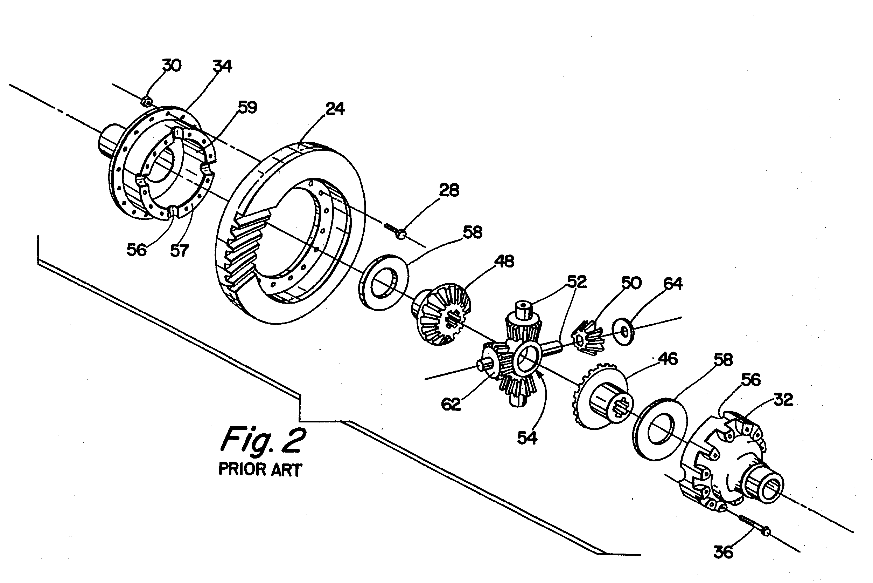

Bevel gear gear drives, such as bevel gear differentials, are well known in the prior art as may be appreciated by reference to aforementioned United States Patents Nos. 3,503,280 and 3,762, 503, both assigned to the assignee of this invention. The structure and function of prior art bevel gear differentials, especially as utilized in drive axles, may be seen by reference to FIGURES 1 and 2.

In FIGURES 1 and 2, a prior art differential head assembly of a single reduction drive axle is illustrated. Although the structure and function of a differential is illustrated in connection with the differential head assembly of a single reduction axle, it is well understood that bevel gear differentials are utilized in multi-speed drive axles, inter-axle power divider assemblies as well as numerous other mechanical gear drive devices.

The differential head assembly 10 illustrated in FIGURES 1 and 2 includes a differential carrier or housing 12 mounted to an axle housing 14 by known means such as bolts or the like (not shown). In the differential carrier is an opening 16 that receives a bearing assembly 18 rotatably supporting on input pinion gear 20 which is connected by an adapter flange 22 to a drive shaft (not shown). A ring gear 24 meshes with the input pinion 20 and is connected to and rotatably supported on a cup shaped differential case 26 by bolts 28 and nuts 30.

The differential case 26 comprises two halves 32 and 34 which are attached by means of bolts 36. Righthand (as seen in FIGURE 2) differential case portion 32 is rotatably supported in a bearing 38 while lefthand (as seen in FIGURE 2) differential case portion 34 is rotatably supported in a bearing 40. The differential case 26 defines a chamber 42 which receives the prior art bevel differential mechanism 44.

The differential mechanism 44 includes differential side gears 46 and 48 which are splined on axle shafts 47 an 49 and which mesh with differential side pinion gears 50. Side pinion gears 50 are rotatably mounted on the differential pinion gear shafts 52 of differential spider member 54. The ends of the differential pinion gear shafts 52 of spider member 54 are received within generally concave cavities 56 provided in the interfacing surfaces 57 of the differential case halves to fix the spider member 54 for rotation with the differential case and ring gear as is well known in the prior art. Side gear thrust washers 58 are provided between the side gears and the inner surfaces of the differential case.

The inner surface 59 of the differential case surrounding the generally concave impressions 56 are spherically machined as at 60 as is substantially the entire radially outer end surface 62 of the side pinion gears for receipt of a spherical side pinion thrust washer 64 therebetween. As is known in bevel gear drives of the type illustrated, under load, the side pinions will tend to move radially outwardly and thus must be supported or restrained against such tendency. As the side pinion gears 50, the side pinion thrust washer 64 and the differential case 26 all rotate as a unit, the rotation of the side pinion gears 50 about side pinion shaft 52 will tend to cause a rubbing contact between the side pinion gears 50, the side pinion thrust washers 64 and the differential case 24. As is known, during spin out conditions, the relatively high rotational velocity of the differential side pinion gears relative to the side pinion thrust washers and differential case may tend to deplete existing lubrication and due to the relative rubbing motion therebetween tend to burn out the side pinion thrust washers 64 requiring replacement thereof.

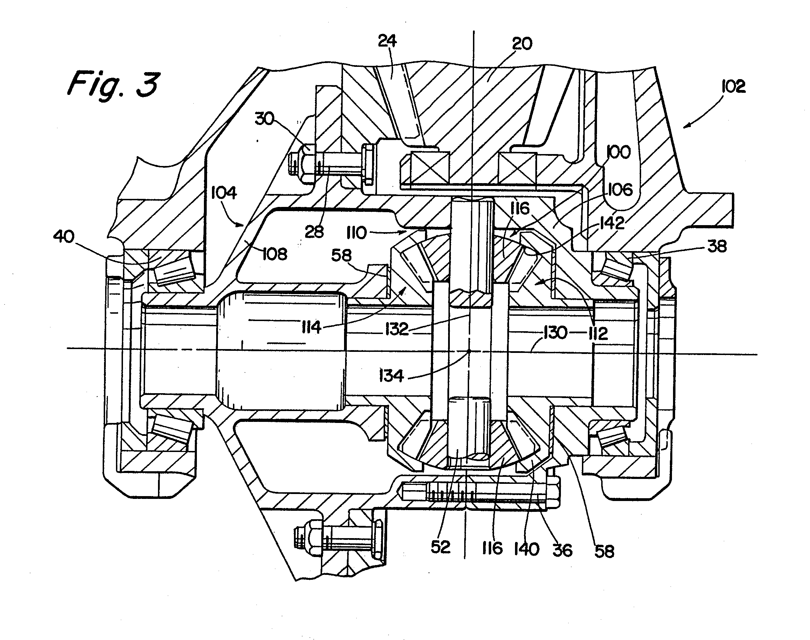

The improved bevel gear drive assembly 100 of the present invention, in the form of a bevel gear differential, may be seen by reference to FIGURES 3-5. In FIGURE 3, the improved bevel gear differential 100 is illustrated in connection with a single speed drive axle differential head assembly 102 similar to that illustrated in FIGURES 1 and 2 and wherein identical or substantially identical components will be assigned like reference numerals. Although the improved bevel gear drive assembly and improved bevel gear structure of the present invention is especially well suited for bevel gear differentials, such as bevel gear differentials utilized in drive axle assemblies, it is understood that neither the bevel gear drive assembly nor the bevel gear structure of the present invention is limited to bevel gear differential assemblies nor bevel gear differential assemblies as utilized with drive axles.

Differential carrier assembly 102 includes a drive pinion gear 20 drivingly meshed with a ring gear 24 which is attached to and supported by a differential case 104 by means of bolts 28 and nuts 30. The differential case 104 comprises two halves 106 and 108 joined by bolts 36. The differential case halves 106 and 108 are supported in the differential carrier by means of bearings 38 and 40, respectively. The differential case halves 106 and 108 define a cavity 110 in which the differential mechanism 100 is received.

Improved pocket bevel differential side gears 112 and 114 are splined on axle shafts (not shown) and mesh with improved bevel differential side pinion gears 116. Side pinion gears 116 are rotatably mounted on differential pinion gear shafts 52 of differential spider 54. The ends of pinion shafts 52 are received within concave cavities 56 to fix the spider for rotation with the differential case 104 and ring gear 24. A side gear thrust washer 58 is interposed the side gears 112 and 114 and the differential casing.

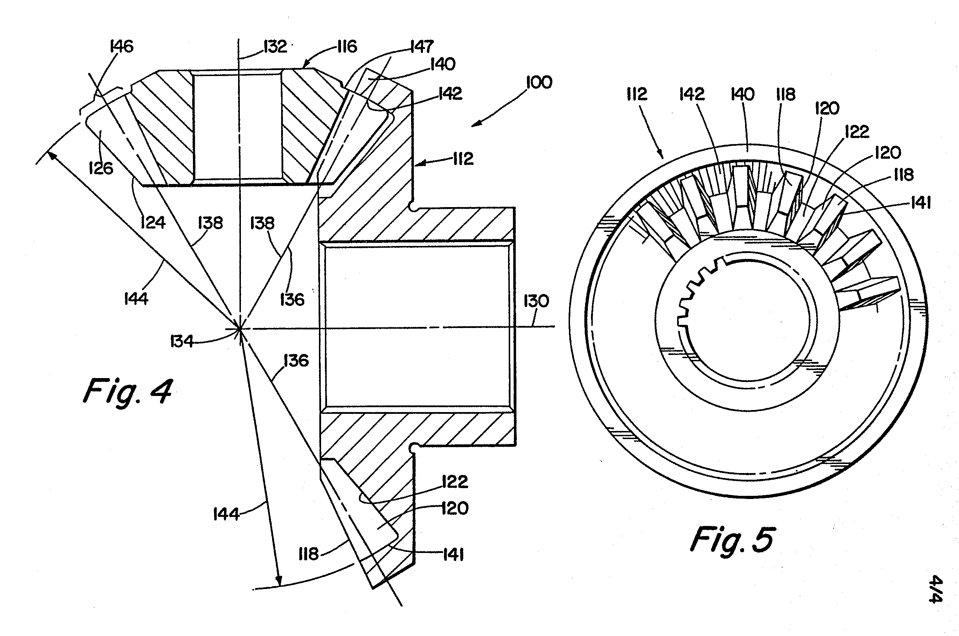

Pocket side gear 112, which is identical or substantially identical to side gear 114, may be seen in greater detail by reference to FIGURES 4 and 5. Side gear 112 has gear teeth 118 having roots 120 and separated from one another by troughs or inter-tooth spaces 122. Gear 112 is intermeshed with the teeth 124 of side pinion gear 116. Gear teeth 124 of side pinion gear 116 have roots 126 and are separated from one
another by troughs or inter-tooth spaces 128. Side gear
112 is fixed to rotate about rotational axis 130 while
side pinion gear 116 is fixed for rotation about
rotational axis 132. As is known in gear design, the
intersection 134 of rotational axis 130 and 132 also
defines the apex for intersection of the gear tooth
pitch lines 136 and 138, also referred to as the apex of
the pitch cones, of gears 112 and 116 respectively.
Pitch lines 136 and 138, respectively, define the pitch
cones of bevel gears 112 and 116, respectively. A more
detailed discussion of bevel gear design terminology may
be seen by reference to Fundamentals of Mechanical
Design, Second Edition, by R. M. Phelan, published by
McGraw Hill Book Company, Inc., Library of Congress Cat.
Card No. 62-14221 at pages 336-343, the disclosure of
which is hereby incorporated by reference.

Side gear 112 is provided with a generally
annular continuous rib 140 about the outer diameter or
heel end 141 of the teeth 118 and tooth spaces 122. The
annular rib or web 140 is of a height generally equal to
or greater than the height (i.e. distance from root to
top land) of the teeth 118. On its radially inner
surface, annular rib 140 defines a concave spherical
radius surface 142 having a spherical radius about the
intersection 134 of the axes of rotation which is also
the apex of the gear tooth pitch lines 136 and 138,
which radius is 144. It is noted that radius 144 of
spherical surface 142 is also the cone distance of gears
112 and 116. The radially outer surfaces 146 of gear
teeth 124 of gear 116 at the heel end 147 of gear 116
are provided with a spherical radius surface convex
about point 134 which radius is also substantially equal
to spherical radius 144.

Accordingly, side pinion gears 116 are supported to resist radially outward movement thereof entirely by the web spherical radius surface 142 which is in rolling contact only with the spherical radius surface 146 on the back side or heel end of gear teeth 124 of gear 116. Accordingly, as may be seen by reference to FIGURE 3, the necessity for machining the area of the differential housing surrounding concave cavities 56 and the requirement for providing thrust washers between side pinion gears 116 and differential case 104 has been eliminated. Additionally, the portion of the back end of gear 116 located radially inwardly from the troughs 128 does not require spherical machining.

The additional advantages of utilizing the illustrated structure of gear 112 includes the tendency of annular rib 140 to form a lubricant trough in combination with tooth troughs 122 and 128 of gears 112 and 116 respectively which will tend to retain additional lubricant in the differential gear tooth meshing area. Additionally, the annular rib 140 will tend to protect the teeth 118 of gear 112 during manufacturing, transporting and assembly thereof.

It is noted that spherical surfaces 146 and 142 are both defined by spherical radius 114 about the same apex 134 and are thus, theoretically, in rolling contact only which will tend to reduce or eliminate the tendency of the gears to wear out and or burn during severe conditions such as during spin out or the like. It is known in the prior art that the side pinion gear thrust washers 64 are the component of a bevel gear differential of the type illustrated in FIGURES 1 and 2 that are most commonly destroyed and requiring replacement in the event of a spin out condition.

Another advantage of the present invention is that, by provision of the annular rib member 140, the strength of the teeth 118 of gear 112 will be increased as is explained in greater detail in United States Patent No. 3,605,518. Accordingly, the thickness of teeth 118 of gear 112 may be reduced as compared to the thickness of teeth of gear 48 of the prior art allowing a corresponding strengthening or thickening of the teeth 124 of gear 116 yielding a stronger bevel gear drive assembly without requiring enlargement of gears 112 or 116 as compared to gears 48 and 50 of the prior art.

Additionally, while machining a spherical surface on the back end of the side pinion gears 50 or 116 is a relatively easily accomplished machining operation in view of the size and shape of the side pinion gears, the machining required on both halves 34 and 32 of the prior art differential case 26 on either side of the cavities 56 which receive the ends of the spider shafts, and assuring that both machine spherical surfaces will mate, is difficult and complicated in view of the requirment of matching the surfaces and of the general shape of the differential cases. Such machining operation has been eliminated by the present invention. Further, the teeth 118 of the improved differential side gear 112 are closed in, or pocketed, by the rib 140 thereby protecting the teeth and eliminating tips on the heel or larger diameter end of the teeth 118 which tips in prior art gear designs are subject to chipping and/or other damage.

It is expected that the improved side bevel gear 112 will be provided by a forging operation and/or possibly by an electrical discharge machining operation.

-11-

Accordingly, it may be seen that the present invention utilizes an improved bevel gear design to provide an improved bevel gear drive, such as an improved bevel gear differential as utilized in a drive axle. Although the present invention has been described with a certain degree of particularity, it is understood that the present description of the preferred embodiment is by way of example only and that various modifications and rearrangement of the elements are possible within the spirit and scope of the following claims.

WE CLAIM:

1. An improved bevel gear (112) of the type comprising a gear body defining a larger diameter heel end and a smaller diameter toe end, a pluraltiy of circumferentially spaced gear teeth (118) having roots (120) connected to said body and extending outwardly from said roots to a top land, circumferentially spaced troughs (122) disposed between said gear teeth, the pitch lines (136) of said gear teeth defining a pitch cone having an apex (134), the heel ends (141) of said gear teeth adjacent said larger diameter heel end of said body spaced from said apex by a distance (144) equal to the pitch cone distance of said gear, the improvement characterized by:

an annular rib (140) attached to said body about the larger diameter end thereof, said rib defining a spherical surface (142) concave towards said apex and of a radius generally equal to said pitch cone distance about said apex, said spherical surface extending from said roots to at least beyond the pitch line of said gear teeth.

2. The improved bevel gear of claim 1 wherein said rib is integral with said body.

3. The improved bevel gear of claim 2 wherein said spherical surface extends from said roots to at least the top lands of said teeth, the radially outer heel ends of said teeth formed integrally with said rib whereby the radially outer heel ends of said teeth do not define tips.

4. An improved bevel gear drive (100) of the type comprising a first bevel gear (112) meshed with a second bevel gear (116);

said first bevel gear (112) comprising a first gear body rotatable about a first axis (130) and defining a larger diameter heel end and a smaller diameter toe end, a plurality of circumferentially spaced first gear teeth (118) having roots (120) connected to said first body and extending outwardly from said roots to a top land, circumferentially spaced first troughs (122) disposed between said first gear teeth, the pitch lines (136) of said first gear teeth defining a first pitch cone having an apex (134) on said first axis, the heel ends (141) of said first gear teeth adjacent said larger diameter heel end of said first body spaced from said apex by a distance (144) equal to the pitch cone distance of said first gear;

said second bevel gear (116) comprising a second gear body rotatable about a second axis (132) and defining a larger diameter heel end and a smaller diameter toe end, said second axis intersecting said first axis at said apex, a plurality of circumferentially spaced second gear teeth (124) having roots (126) connected to said second body and extending outwardly from said roots to a top land, circumferentially spaced second troughs (128) disposed between said second gear teeth, said second gear teeth meshed with said first gear teeth, the pitch lines (138) of said second gear teeth defining a second pitch cone having the same apex as said first pitch cone, the heel ends of said second gear teeth adjacent said larger diameter heel end of said second body spaced from said apex by a distance equal to the pitch cone distance of said first gear;

the improvement characterized by:

said first gear including an annular rib (140) about the larger diameter end thereof, said rib defining a spherical surface (142) concave towards said apex and of a radius (144) generally equal to said pitch cone distance about said apex, said spherical surface extending from said roots of said first teeth to at least beyond the pitch lines of said first teeth, and

said second gear including a spherical surface (146) at the larger diameter heel end thereof convex about said apex and of a radius (144) generally equal to said pitch cone distance about said apex, said surface extending from the pitch line of said second gear teeth radially inwardly toward the roots of said second gear teeth and radially outwardly towards the top lands of said second gear teeth.

5. The improved bevel gear drive of claim 4 wherein said first and second axes of rotation an intersect at a right angle.

6. The improved bevel gear drive of claim 4 wherein said convex surface extends from said roots to said top lands of said second gear teeth.

7. The improved gear drive of claim 5 wherein said gear drive is a bevel gear differential comprising two (112, 114) first gears both rotatable about said first axis and at least two second gears, the axes of rotation of said second gears all located on a plane perpendicular to said first axis, the axes of rotation of both of said first gears and all of said second gears intersecting at said apex.

8. The improved gear drive of claim 7 wherein said second gears are restrained against axial movement along the second axes thereof away from said apex solely by the contact of said concave and convex spherical surfaces.

9. An improved bevel gear differential (100) of the type comprising at least two independently rotatable bevel side gears (112, 114) meshed with a plurality of bevel pinion gears (116), said side gears rotatable about a first axis (130) and facing one another with said pinion gears meshingly interposed, said pinion gears carried on a spider body (54) rotatable about said first axis and including a plurality of pinion shafts (52) lying on a plane perpendicular to said first axis and defining a plurality of second axes (132) about which said pinion gears are rotatable;

each of said bevel side gears comprising a first gear body rotatable about said first axis and defining a larger diameter heel end and a smaller diameter toe end, a plurality of circumferentially spaced first gear teeth having roots connected to said first body and extending outwardly from said roots to a top land, circumferentially spaced first troughs disposed between said first gear teeth, the pitch lines of said first gear teeth defining a first pitch cone having an apex on said first axis, the heel ends of said first gear teeth adjacent said larger diameter heel end of said first body spaced from said apex by a distance equal to the pitch cone distance of said side gear;

each of said bevel pinion gears comprisng a second gear body rotatable about a second axis and defining a larger diameter heel end and a smaller diameter toe end, said second axis intersecting said first axis at said apex, a plurality of circumferentially spaced second gear teeth having roots connected to said second body and extending outwardly from said roots to a top land, circumferentially spaced troughs disposed between said second gear teeth, said second gear teeth meshed with said first gear teeth of both of said side gears, the pitch lines of said second gear teeth defining a second pitch cone having the same apex as said first pitch cones, the heel ends of said second gear teeth adjacent said larger diameter heel end of said second body spaced from said apex by a distance equal to·the pitch cone distance of said first gears;

the improvement characterized by:

each of said side gears including an annular rib about the larger diameter end thereof, said rib defining a spherical surface concave towards said apex and of a radius generally equal to said pitch cone distance about said apex, said spherical surface extending from said roots of said first teeth to at least beyond the pitch lines of said first teeth, and

each of said pinion gears including a spherical surface at the larger diameter heel end thereof convex about said apex and of a radius generally equal to said pitch cone distance about said apex, said convex spherical surface extending from the pitch line of said second gear radially inwardly toward the roots of said second gear teeth and radially outwardly towards the top lands of said second gear teeth.

10. The improved differential of claim 9 wherein said pinion gears are restrained against axial movement along the second axes thereof away from said apex solely by the contact of said concave and convex spherical surfaces.

11. The improved differential of claim 10 wherein said contact of said spherical surfaces is substantially a rolling contact.

*Fig. 1*

PRIOR ART

Fig. 2
PRIOR ART

Fig. 3

0118261

Fig. 5

Fig. 4

# EUROPEAN SEARCH REPORT

European Patent Office

| | **DOCUMENTS CONSIDERED TO BE RELEVANT** | | EP 84301205.5 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X | US - A - 3 930 424 (MYERS) | 1,3-7, 9 | F 16 H 1/14 |
| Y | * Totality * | 2 | F 16 H 1/44 |
| Y | US - A - 3 438 282 (THORNTON) * Fig. 1,8 * | 2,5,7 | |
| A,P | EP - A1 0 080 947 (RENAULT) * Totality * | | |
| A | DE - A - 2 751 360 (WESTLAND AIR- CRAFT) * Totality * | | |
| A | GB - A - 298 228 (STOECKICHT) * Totality * | | **TECHNICAL FIELDS SEARCHED (Int. Cl. ³)** |
| A | US - A - 1 893 572 (WILDHABER) * Totality * | | F 16 H 1/00 F 16 H 55/00 |
| A | US - A - 2 971 404 (THORNTON) * Totality * | | |
| A,D | US - A - 3 779 101 (CHAPUT) * Totality * | | |

The present search report has been drawn up for all claims

| Place of search | Date of completion of the search | Examiner |
|---|---|---|
| VIENNA | 14-05-1984 | SCHATEK |

EPO Form 1503 03.82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

| | DOCUMENTS CONSIDERED TO BE RELEVANT | | CLASSIFICATION OF THE APPLICATION (Int. Cl.³) |
|---|---|---|---|
| Category | Citation of document with indication, where appropriate. of relevant passages | Relevant to claim | |
| A,D | US - A - 3 861 231 (F'GEPPERT) <br> * Totality * <br><br> ———— | | |
| | | | TECHNICAL FIELDS SEARCHED (Int. Cl.³) |

EPO Form 1503.2   06.78